# EUROPEAN PATENT APPLICATION

(11) **EP 4 431 370 A1**
(43) Date of publication of application: **18.09.2024**
(21) Application number: 22893111.9
(22) Date of filing: 03.11.2022
(51) Int. Cl.: B62D 25/02, B62D 21/15, B60K 1/04

(54) **VEHICLE SIDE SILL**

(30) Priority: 12.11.2021 KR 20210155818
(71) Applicant: POSCO Co., Ltd, Pohang-si, Gyeongsangbuk-do 37859 (KR)
(72) Inventor: LEE, Gyu-Min, Incheon 21985 (KR); PARK, Jong-Cheol, Incheon 21985 (KR)
(74) Representative: Meissner Bolte Partnerschaft mbB
(86) International application number: PCT/KR2022/017116
(87) International publication number: WO 2023/085689

(57) **Abstract**

The present invention provides a vehicle side sill comprising: a first side sill frame; a second side sill frame coupled to the first side sill frame so as to form a hollow portion together with the first side sill frame; a first reinforcing frame which is disposed in the hollow portion, and which has one side joined to the first side sill frame so as to form a first closed section; a diaphragm member which is joined to the first side sill frame and the second side sill frame so as to divide the hollow portion, and to which the other side of the first reinforcing frame is joined; and a second reinforcing frame disposed in the hollow portion, and joined to the diaphragm member so as form a second closed section, wherein the first reinforcing frame has a bending point with a shape of protruding outward from the first closed section.

## Description

### Technical Field

The present disclosure relates to a side sill for a vehicle.

### Background Art

It should be noted that the content described in this section simply provides background information on the present disclosure and does not constitute prior art.

A side sill applied to an eco-friendly vehicle such as an electric vehicle play a role in protecting not only passengers but also batteries disposed on a floor. Since batteries are relatively bulky as compared to other components of a vehicle, a side space of a vehicle equipped with a battery is relatively narrow as compared to a vehicle equipped with an internal combustion engine.

Therefore, the side sill applied to an eco-friendly vehicle must be able to absorb maximum impact energy within a narrow space, and must have a minimum weight in order to improve the energy efficiency of an eco-friendly vehicle.

To this end, an aluminum extrusion material has been applied to the side sill of an eco-friendly vehicle, but it is still necessary to improve collision energy absorption performance and achieve weight reductions.

(Patent Document 1) KR 20-1998-0043143 U

### Summary of Invention

### Technical Problem

An aspect of the present disclosure is to provide a side sill for a vehicle which may efficiently absorb collision energy and achieve weight reduction.

An aspect of the present disclosure is to provide a side sill for a vehicle which may safely protect passengers and a battery as a core component by minimizing the amount of indoor inflow caused by a collision.

### Solution to Problem

According to an aspect of the present disclosure, provided is a side sill for a vehicle including: a first side sill frame; a second side sill frame coupled to the first side sill frame so as to form a hollow portion together with the first side sill frame; a first reinforcing frame which is disposed in the hollow portion, and which has one side joined to the first side sill frame so as to form a first closed section; a diaphragm member which is joined to the first side sill frame and the second side sill frame so as to divide the hollow portion, and to which the other side of the first reinforcing frame is joined; and a second reinforcing frame disposed in the hollow portion, and joined to the diaphragm member so as to form a second closed section, wherein the first reinforcing frame has a bending point with a shape of protruding outward from the first closed section.

According to another aspect of the present disclosure, provided is a side sill for a vehicle including: a first side sill frame; a second side sill frame coupled to the first side sill frame so as to form a hollow portion together with the first side sill frame; a first reinforcing frame which is disposed in the hollow portion, and which has one side joined to the first side sill frame so as to form a first closed section; and a second reinforcing frame which is disposed in the hollow portion, and which has one side joined to the first reinforcing frame so as to form a second closed section, wherein the first reinforcing frame has a bending point with a shape of protruding outward from the first closed section.

At least one of the first side sill frame, the second side sill frame, the first reinforcing frame, and the second reinforcing frame may be formed of a steel material.

The first reinforcing frame and the second reinforcing frame may include a concavo-convex portion in a longitudinal cross-section of the side sill.

The concavo-convex portion may be configured so that a protruding surface and an insertion surface are alternately formed in a longitudinal direction of the side sill, and an inclined surface is formed between the protruding surface and the insertion surface.

The protruding surface of the first reinforcing frame may overlap the protruding surface of the second reinforcing frame, and the insertion surface of the first reinforcing frame may overlap the insertion surface of the second reinforcing frame.

The first reinforcing frame may be formed so that the bending point is spaced apart from a first inner surface of the first side sill frame by 30% to 70% of an installation width of the first reinforcing frame.

The first reinforcing frame may include: a first section extending in a direction of a first inner surface of the first side sill frame with the bending point as a boundary; and a second section bent with the bending point as a boundary to extend in a direction of a second inner surface of the second side sill frame, and forming a bending angle with the first section inside the first closed section.

The first reinforcing frame may be configured so that the bending angle is formed inside the first closed section, and the bending angle has a range of 165 to 175 degrees.

The second reinforcing frame may be formed so that the other side thereof is disposed to be in contact with a second inner surface of the second side sill frame.

*The first reinforcing frame and the second reinforcing frame are configured so that an installation width thereof does not decrease from a second inner surface of the second side sill frame to a first inner surface of the first side sill frame.

The first reinforcing frame and the second reinforcing frame are configured so that a single steel sheet is bent in multiple stages.

### Advantageous Effects of Invention

According to an aspect of the present disclosure, a side sill for a vehicle may efficiently absorb collision energy and may achieve weight reduction.

According to an aspect of the present disclosure, a side sill for a vehicle may safely protect passengers and a battery as a core component by minimizing the amount of indoor inflow caused by a collision.

### Brief Description of Drawings

FIG. 1 is a perspective view of a side sill for a vehicle of a first comparative example in contrast to a side sill for a vehicle of the present disclosure.
FIG. 2 is a cross-sectional view of FIG. 1.
FIG. 3 is a perspective view of a side sill for a vehicle of a second comparative example in contrast to a side sill for a vehicle of the present disclosure.
FIG. 4 is a cross-sectional view of FIG. 3.
FIG. 5 is a perspective view of a side sill for a vehicle according to a first embodiment of the present disclosure.
FIG. 6 is a cross-sectional view of FIG. 5.
FIG. 7 is a view illustrating a position of a bending point of a side sill for a vehicle according to the first embodiment of FIG. 5.
FIG. 8 is a perspective view of a side sill for a vehicle according to a second embodiment of the present disclosure.
FIG. 9 is a cross-sectional view of FIG. 8.
FIG. 10 is a view illustrating a position of a bending point of a side sill for a vehicle according to a second embodiment of FIG. 8.
FIGS. 11A to 11C are results of a deformation analysis of the side sill for a vehicle of the first comparative example.
FIGS. 12A to 12C are results of a deformation analysis of a side sill for a vehicle according to the first embodiment.
FIGS. 13A to 13C are results of a deformation analysis of the side sill for a vehicle of the second comparative example.
FIGS. 14A to 14C are results of a deformation analysis of a side sill for a vehicle according to a second embodiment.
FIG. 15 is a side sill for a vehicle of the first comparative example of FIG. 1 and a load-displacement diagram of the first embodiment of FIG. 5.
FIG. 16 is a side sill for a vehicle of the third comparative example of FIG. 3 and a load-displacement diagram of the second embodiment of FIG. 8.

### Best Mode for Invention

Hereinafter, with reference to the drawings, specific embodiments of the present disclosure will be described. However, embodiments of the disclosed technology may be modified into various different forms, and the scope of the disclosed technology is not limited to the suggested embodiments. Furthermore, embodiments of the disclosed technology are provided to more fully explain the disclosed technology to those skilled in the art who understand the idea of the disclosed technology. In the drawings, the shapes and dimensions of elements may be exaggerated for further clarity.

Hereinafter, an X-axis illustrated in the attached drawing is a width direction of a side sill for a vehicle, a Y-axis is a longitudinal direction of the side sill for a vehicle, and a Z-axis is a height direction of the side sill for a vehicle.

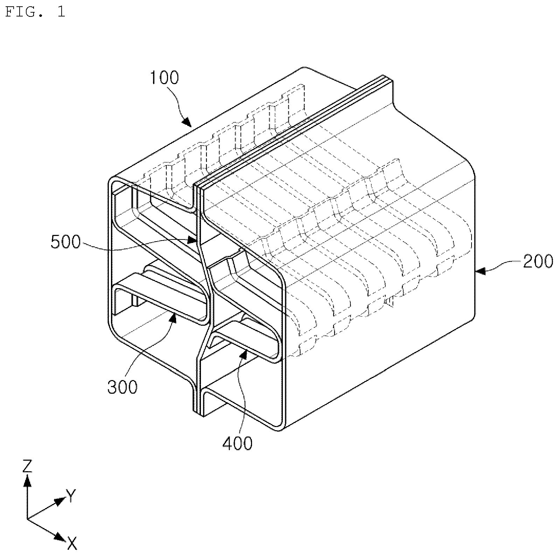

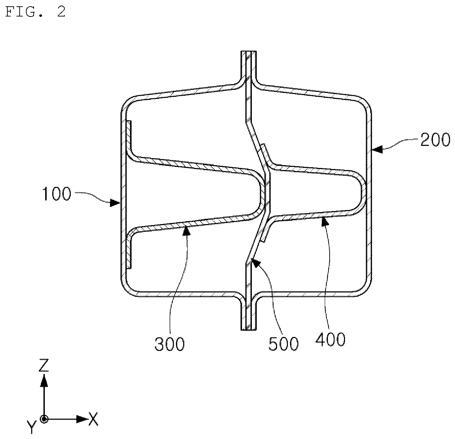

FIG. 1 is a perspective view of a side sill for a vehicle of a first comparative example in contrast to a side sill for a vehicle of the present disclosure. FIG. 2 is a cross-sectional view of FIG. 1.

The first comparative example differs from the first embodiment to be described below in that a first reinforcing frame 300 does not form a bending point 370 protruding outward (Z-axis direction) from a first closed section M1.

In the case of the first comparative example, the deformation of a first reinforcing frame 300 and a second reinforcing frame 400 is not normally crushed in an X-axis direction, and has a problem in that deformation inclined in the Z-axis direction occurs. This may be a major unstable factor in exhibiting stable collision energy absorption performance under various collision environments.

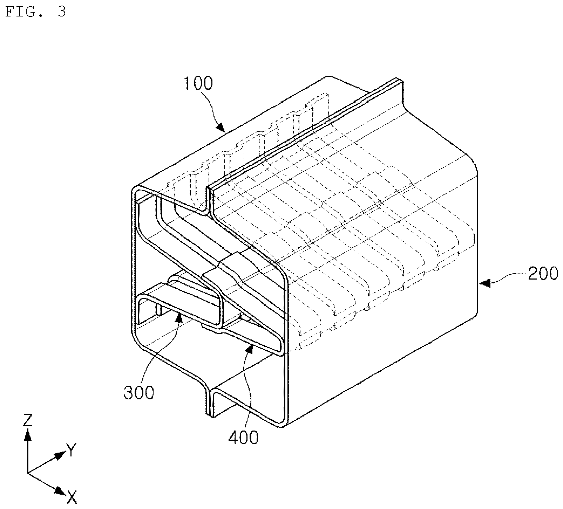

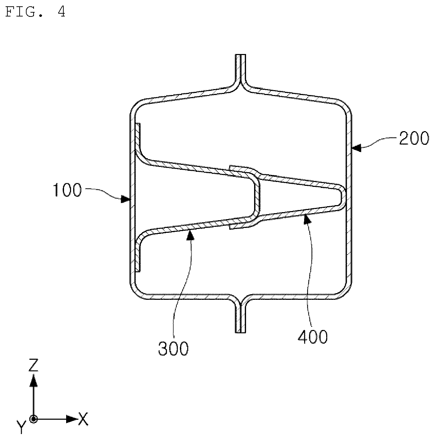

FIG. 3 is a perspective view of a side sill for a vehicle of a second comparative example in contrast to a side sill for a vehicle of the present disclosure, and FIG. 4 is a cross-sectional view of FIG. 3.

The second comparative example differs from a second embodiment to be described below in that a first reinforcing frame 300 does not form a bending point 370 protruding outward (Z-axis direction) from a first closed section M1.

In the case of the second comparative example, the deformation of a first reinforcing frame 300 and a second reinforcing frame 400 is not normally crushed in the X-axis direction, and has a problem in that deformation inclined in the Z-axis direction occurs. This may be a major unstable factor in exhibiting stable collision energy absorption performance under various collision environments.

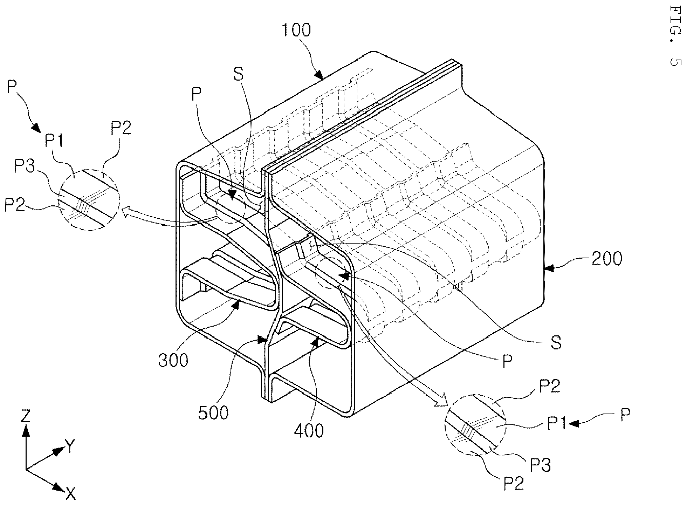

Hereinafter, components included in a side sill for a vehicle according to a first embodiment and a second embodiment will be described in detail with reference to FIGS. 5 to 10.

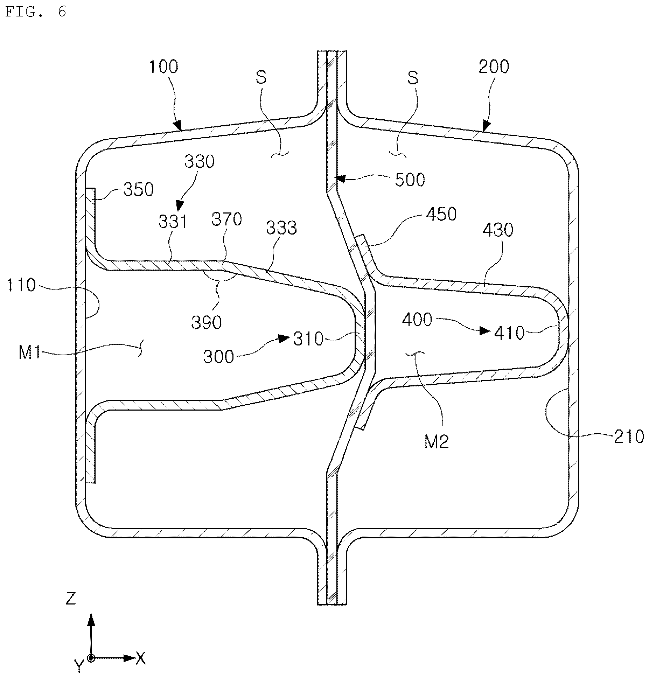

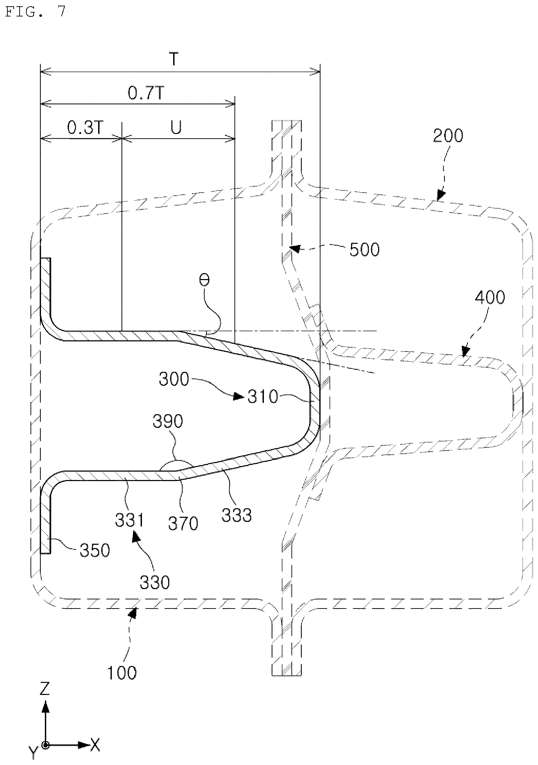

FIG. 5 is a perspective view of a side sill for a vehicle according to the first embodiment of the present disclosure, and FIG. 6 is a cross-sectional view of FIG. 5. FIG. 7 is a view illustrating a position U of a bending point 370 of a side sill for a vehicle according to the first embodiment of FIG. 5.

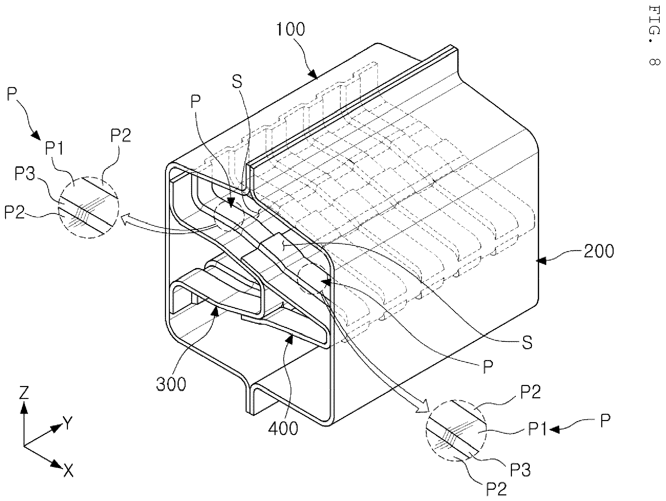

FIG. 8 is a perspective view of a side sill for a vehicle according to a second embodiment of the present disclosure, and

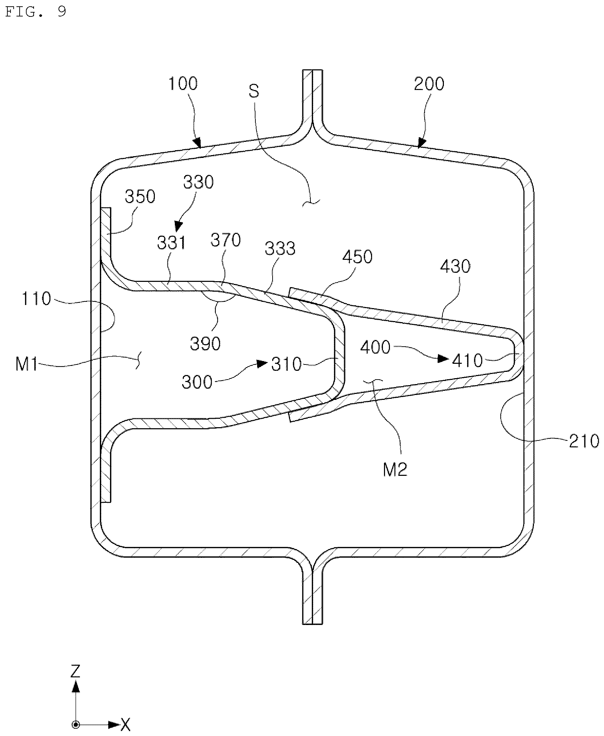

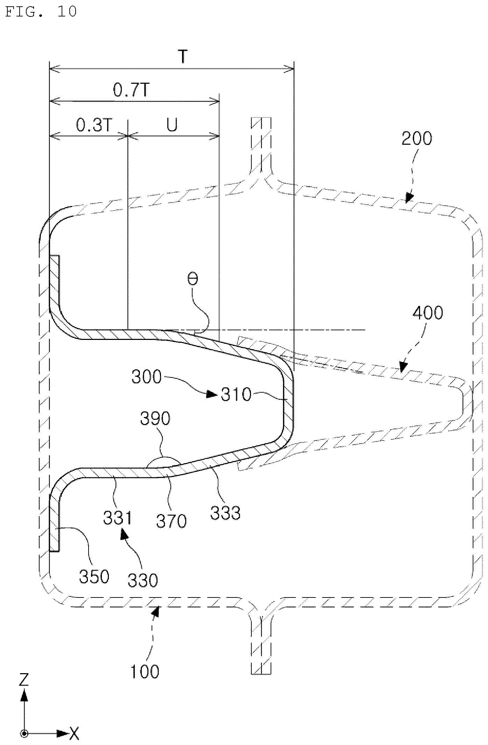

FIG. 9 is a cross-sectional view of FIG. 8. FIG. 10 is a view illustrating a position U of a bending point 370 of a side sill for a vehicle according to the second embodiment of FIG. 8.

The side sill for a vehicle according to the first embodiment may include a first side sill frame 100, a second side sill frame 200, a first reinforcing frame 300, a diaphragm member 500, and a second reinforcing frame 400.

The first side sill frame 100 may be disposed in a widthwise internal side of the side sill in the X-axis direction.

The second side sill frame 200 maybe coupled to the first side sill frame 100 to form a hollow portion S together with the first side sill frame 100.

The second side sill frame 200 may be disposed in a widthwise external side of the side sill in the X-axis direction. The second side sill frame 200 may be joined to the first side sill frame 100 by welding bonding or the like.

The first reinforcing frame 300 may be disposed in the hollow portion S, and one side thereof may be joined to the first side sill frame 100 to form a first closed section M1.

The first reinforcing frame 300 may have a bending point 370 protruding outward (Z-axis direction) from the first closed section M1.

The first reinforcing frame 300 may be joined to the first side sill frame 100 to form a first closed section M1, thereby improving the mechanical rigidity of the side sill for a vehicle.

The first reinforcing frame 300 may include a first upper flange 310, a pair of first web members 330, and a pair of first lower flanges 350 on an X-Z axis cross-section of the side sill.

The first web members 330 may be connected to both ends of the first upper flange 310 in a height direction, respectively.

The first upper flange 310 may be joined to the diaphragm member 500.

The first upper flange 310 may be a flat surface. Accordingly, when an adhesive or the like is applied to the first upper flange 310, adhesion force of the first upper flange 310 may be improved, and convenience of adhesion and assembly operations may be improved.

The first web member 330 may extend from the first upper flange 310 and may extend toward a first inner surface 110 of the first side sill frame 100.

The first reinforcing frame 300 may be bent-molded so that the first web member 330 and the first lower flange 350 are disposed to cross each other.

The first web member 330 may be obliquely formed, and may extend immediately before the diaphragm member 500 while not coming into contact with the first side sill frame 100. Accordingly, when load is applied in the X-axis direction, the first reinforcing frame 300 may be easily compressed and deformed in a load direction.

The first lower flange 350 may be joined to the first inner surface 110 of the first side sill frame 100.

The diaphragm member 500 may be joined to the first side sill frame 100 and the second side sill frame 200 to divide the hollow portion S, and the other side of the first reinforcing frame 300 may be joined to the diaphragm member 500.

The first reinforcing frame 300 may be joined to one side of the diaphragm member 500, and the second reinforcing frame 400 may be bonded to the other side thereof.

The diaphragm member 500 is disposed between the first side sill frame 100 and the second side sill frame 200, and one side thereof may be joined to the first side sill frame 100 and the second side sill frame 200, and the other side thereof may be joined to the first side sill frame 100 and the second side sill frame 200.

When load is applied to the diaphragm member 500 in the X-axis direction, the first side sill frame 100 and the second side sill frame 200 may be stably compressed and deformed in a load direction. Accordingly, the diaphragm member 500 may serve to improve the absorption performance of collision energy.

The second reinforcing frame 400 may be disposed in the hollow portion S and joined to the diaphragm member 500 to form a second closed section M.

The second reinforcing frame 400 may be joined to the diaphragm member 500 on one side thereof to form the second closed section M2, thereby improving the mechanical rigidity of the side sill for a vehicle.

The second reinforcing frame 400 may include a second upper flange 410, a pair of second web members 430, and a pair of second lower flanges 450 on the X-Z axis cross-section of the side sill.

The second upper flange 410 may be a flat surface. Accordingly, when an adhesive or the like for adhesion to the second upper flange 410 and the second side sill frame 200 is applied, the adhesion force of the second upper flange 410 may be improved, and the convenience of adhesion and assembly operations may be improved.

The second web members 430 may be connected to both ends of the second upper flange 410 in the height direction.

The second web member 430 may extend from the second upper flange 410 and may extend toward the first inner surface 110 of the first side sill frame 100.

The second lower flange 450 of the second reinforcing frame 400 may be joined to the diaphragm member 500.

The second lower flange 450 may be in contact with and fixed to the diaphragm member 500, and the second web member 430 may extend immediately before the second side sill frame 200 while not coming into contact with the second side sill frame 200. Accordingly, when load is applied in the X-axis direction, the second reinforcing frame 400 may be easily compressed and deformed in the load direction.

A first joining surface may exist on the first upper flange 310, and a second joining surface may exist on the second upper flange 410.

The first joining surface and the second joining surface may be flat surfaces, thereby improving joining performance.

The first upper flange 310 may exist continuously for a certain period in a direction, parallel to a Y-axis, and may continuously come into contact with the diaphragm member 500 for a certain period.

The second upper flange 410 may exist continuously for a certain period in a direction, parallel to the Y-axis, and may continuously come in to contact with the second side sill frame 200 for a certain period.

Accordingly, the first joining surface and the second joining surface may exist continuously for a certain period in the Y-axis direction, an entire first joining surface may be joined to the diaphragm member 500, and an entire second joining surface may be joined to the second side sill frame 200, thereby improving bonding performance.

For example, the first side sill frame 100 and the first reinforcing frame 300 are joined by spot welding, the first reinforcing frame 300 and the diaphragm member 500 may be joined with an adhesive, and the second reinforcing frame 400 and the second side sill frame 200 may be joined with an adhesive.

The diaphragm member 500 and the second reinforcing frame 400 may be joined by spot welding, and the first side sill frame 100 and the second side sill frame 200 may be joined by spot welding.

Various joining methods such as welding joining, adhesive joining, and the like, may be applied to joining between members such as the first side sill frame 100, the second side sill frame 200, the first reinforcing frame 300, the diaphragm member 500, and the second side sill frame 200.

At least one of the first side sill frame 100, the second side sill frame 200, the first reinforcing frame 300, and the second reinforcing frame 400 may be formed by foam-forming or crash-forming a steel sheet. This may contribute to reducing manufacturing costs by reducing mold costs.

The first side sill frame 100, the second side sill frame 200, the first reinforcing frame 300, and the second reinforcing frame 400 may be formed of ultra-high strength steel having a tensile strength of 980 MPa or more.

For example, the first side sill frame 100 and the second side sill frame 200 may be formed of a material containing 1470 MART steel, and the first reinforcing frame 300 and the second reinforcing frame 400 may be formed of a material containing 1180 TRIP steel.

Referring to FIGS. 8 to 10, a side sill for a vehicle according to the second embodiment may include a first side sill frame 100, a second side sill frame 200, a first reinforcing frame 300, and a second reinforcing frame 400.

The side sill for a vehicle according to the second embodiment is different in that the components of the diaphragm member 500 are removed between the first reinforcing frame 300 and the second reinforcing frame 400, but the remaining components may have the same configuration as the configuration of the side sill for a vehicle of the first embodiment described above. Therefore, hereinafter, components of the second embodiment different from the first embodiment will be mainly described.

The first reinforcing frame 300 may include a first upper flange 310, a pair of first web members 330, and a pair of first lower flanges 350 on the X-Z axis cross-section of the side sill.

The first web members 330 may be connected to both ends of the first upper flange 310 in the height direction. As the second lower flange 450 is joined to the first web member 330, the first upper flange 310 may be disposed in a boundary between the first closed section M1 and the second closed section M2.

The second reinforcing frame 400 may be disposed in the hollow portion S, and one side thereof may be joined to the first reinforcing frame 300 to form a second closed section M2.

The second reinforcing frame 400 is joined to the first reinforcing frame 300 on one side thereof to form a second closed section M2, thereby improving the mechanical rigidity of the side sill for a vehicle.

The second reinforcing frame 400 may include a second upper flange 410, a pair of second web members 430, and a pair of second lower flanges 450 on the X-Z axis cross-section of the side sill.

The second lower flange 450 of the second reinforcing frame 400 may be joined to the first web member 330 of the first reinforcing frame 300.

The second lower flange 450 may form a step portion between the second web members 430, and a gap between the pair of second lower flanges 450 in the Z-axis direction may be wider than a gap between the pair of second web members 430 in the Z-axis direction.

For example, the first side sill frame 100 and the first reinforcing frame 300 may be joined by spot welding, the first reinforcing frame 300 and the second reinforcing frame 400 may be joined by laser welding or spot welding, and the second side sill frame 200 and the second reinforcing frame 400 maybe joined by an adhesive.

The first side sill frame 100 and the second side sill frame 200 may be joined by spot welding.

Various joining methods such as welding joining, adhesive joining, and the like, may be applied to joining between members such as the first reinforcing frame 300, the second reinforcing frame 400, the first side sill frame 100, and the second side sill frame 200.

At least one of the first side sill frame 100, the second side sill frame 200, the first reinforcing frame 300, and the second reinforcing frame 400 may be formed of a steel material.

For example, the first side sill frame 100, the second side sill frame 200, the first reinforcing frame 300, and the second reinforcing frame 400 may be formed of a steel material. Accordingly, the mechanical rigidity of the side sill for a vehicle may be improved.

The first reinforcing frame 300 and the second reinforcing frame 400 may include a concavo-convex portion P on a longitudinal cross-section of the side sill.

The first reinforcing frame 300 and the second reinforcing frame 400 may repeatedly have the concavo-convex portions P formed in a longitudinal direction.

The first reinforcing frame 300 and the second reinforcing frame 400 may include the concavo-convex portions P, thereby improving rigidity without increasing a thickness of the steel material constituting the first reinforcing frame 300 and the second reinforcing frame 400.

* In the concavo-convex portion P, a protruding surface P1 and an insertion surface P2 may be alternately formed in the longitudinal direction of the side sill, and an inclined surface P3 may be formed between the protruding surface P1 and the insertion surface P2.

A protruding surface P1 of the first reinforcing frame 300 may overlap a protruding surface P1 of the second reinforcing frame 400, and an insertion surface P2 of the first reinforcing frame 300 may overlap an insertion surface P2 of the second reinforcing frame 400.

The protruding surface P1 of the first reinforcing frame 300 and the second reinforcing frame 400 may overlap each other, and the insertion surfaces P2 of the first reinforcing frame 300 and the second reinforcing frame 400 may overlap each other, thereby improving coupling force between the first reinforcing frame 300 and the second reinforcing frame 400.

Since the protruding surfaces P1 of the first reinforcing frame 300 and the second reinforcing frame 400 overlap each other, and the insertion surfaces P2 of the first reinforcing frame 300 and the second reinforcing frame 400 overlap each other, a combined position of the first reinforcing frame 300 and the second reinforcing frame 400 may be guided naturally, thereby improving the workability of a worker.

The bending point 370 of the first reinforcing frame 300 may be formed to be spaced apart from the first inner surface 110 of the first side sill frame 100 by a distance of 30 to 70% of an installation width T of the first reinforcing frame 300.

When the bending point 370 is less than 30% or more than 70% of the installation width T of the first reinforcing frame 300 from the first inner surface 110 of the first side sill frame 100, normal crushing may not be performed while bending is not properly induced at the bending point 370 of the first reinforcing frame 300.

When the normal crushing does not occur in the first reinforcing frame 300, as in the comparative example described above, tilting deformation may occur and a problem may occur in which sufficient load performance cannot be achieved. Furthermore, this may be a major factor of uncertainty in exhibiting stable collision energy absorption performance under various collision environments by a side sill for a vehicle.

The first reinforcing frame 300 may include a first section 331 and a second section 333.

The first section 331 may be formed to extend toward the first inner surface 110 of the first side sill frame 100 with the bending point 370 as a boundary.

The second section 333 may be bent with the bending point 370 as a boundary to extend toward the second inner surface 210 of the second side sill frame 200, and may form a bending angle 390 with the first section 331 inside the first closed section M1.

There may be a bending point 370 in a boundary between the first section 331 and the second section 333.

The first reinforcing frame 300 may have the first section 331 and the second section 333 bent with the bending point 370 a boundary.

The bending angle 390 may be formed inside the first closed section M1 and may be less than 180 degrees.

In the first reinforcing frame 300, the bending angle 390 may be formed inside the first closed section M1, and the bending angle 390 may range from 165 to 175 degrees. An angle θ formed by an extension line of the first section 331 and an extension line of the second section 333 may range from 5 to 15 degrees.

As the first section 331 and the second section 333 are bent based on the bending point 370, the bending angle 390 may be formed inside the first closed section M1.

Since the first reinforcing frame 300 has the bending angle 390 in the range of 165 to 175 degrees, the rigidity of the first reinforcing frame 300 may be sufficiently secured, thereby stable inducing bending at the bending point 370.

When the bending angle 390 of the first reinforcing frame 300 is less than 165 degrees, the bending may be easily induced at the bending point 370, but as the bending becomes too easy to induce at the bending point 370 of the first reinforcing frame 300, the first reinforcing frame 300 may be bent at the bending point 370 before exerting load performance in terms of the design, leading to a decrease in the load performance.

Normal crushing does not occur in the first reinforcing frame 300, and tilting deformation may occur as in the comparative example described above, which may cause a problem in which sufficient load performance may not be achieved. Furthermore, this may be a major factor of uncertainty in exhibiting stable collision energy absorption performance under various collision environments by a side sill for a vehicle.

When the bending angle 390 exceeds 175 degrees, the bending may not be induced properly at the bending point 370, and the normal crushing may not be achieved.

The normal crushing does not occur in the first reinforcing frame 300, and the tilting deformation may occur as in the comparative example described above, which may cause a problem in which the load performance may not be achieved in terms of the design.

The other side of the second reinforcing frame 400 may be disposed to be in contact with the second inner surface 210 of the second side sill frame 200.

One side of the second reinforcing frame 400 may be disposed to be in contact with the first reinforcing frame 300, and the other side thereof may be disposed to be in contact with the second inner surface 210 of the second side sill frame 200.

One side of the second reinforcing frame 400 may be joined to the first reinforcing frame 300, and the other side thereof may be joined to the second inner surface 210 of the second side sill frame 200.

Accordingly, when an impact is applied from the second side sill frame 200, the impact may be primarily buffered by the second reinforcing frame 400 in contact with the second side sill frame 200 and be secondarily buffered by the first reinforcing frame 300 in contact with the second reinforcing frame 400, thereby stably absorbing impact energy applied to the side sill.

In the first reinforcing frame 300 and the second reinforcing frame 400, an installation width thereof may not decrease in a direction oriented from the second inner surface 210 of the second side sill frame 200 to the first inner surface 110 of the first side sill frame 100.

In an example, in the first reinforcing frame 300 and the second reinforcing frame 400, an installation width thereof may increase in a direction oriented from the first inner surface 110 of the first side sill frame 100 to the second inner surface 210 of the second side sill frame 200.

In another example, in the first reinforcing frame 300 and the second reinforcing frame 400, an installation width thereof may increase in a direction oriented from the first inner surface 110 of the first side sill frame 100 to the second inner surface 210 of the second side sill frame 200, or the first reinforcing frame 300 and the second reinforcing frame 400 may have at least the same installation width and the installation width thereof may not be reduced.

An impact may be applied in the X-axis direction from the second side sill frame 200, and when the installation width of the first and second reinforcing frames 300 and 400 increases in a direction away from a point in which the impact is applied, the first and second reinforcing frames 300 and 400 may be easily compressed and deformed in a direction in which the impact is applied, thereby improving load performance.

The first reinforcing frame 300 and the second reinforcing frame 400 may be formed by bending a single steel sheet in multiple stages.

The first and second reinforcing frames 300 and 400 may be formed by bending a single steel sheet in multiple stages. As the first reinforcing frame 300 is formed by bending a single steel sheet in multiple stages, the first and second reinforcing frames 300 and 400 formed of a single steel sheet may operate as one unit, thereby improving the mechanical rigidity of the side sill for a vehicle.

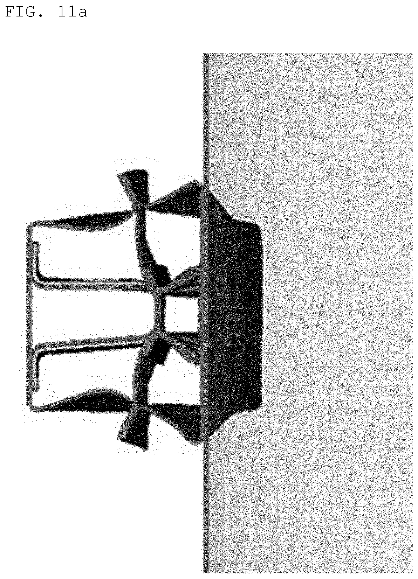

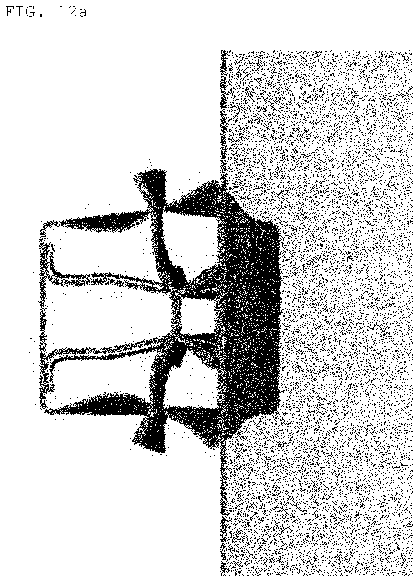

Hereinafter, with reference to FIGS. 11A to 12C, a deformation analysis result of a side sill for a vehicle of the first comparative example and a side sill for a vehicle of the first embodiment will be described.

FIGS. 11A to 11C are deformation analysis results of the side sill for a vehicle of the first comparative example.

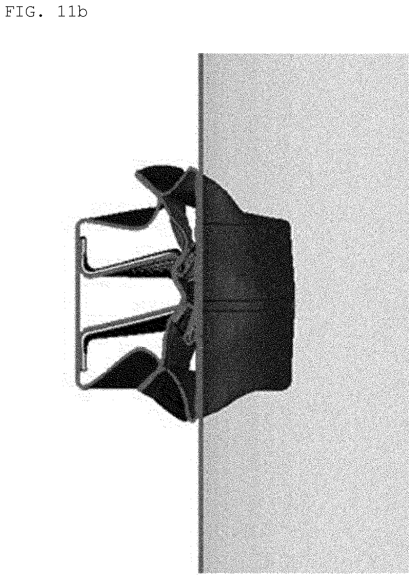

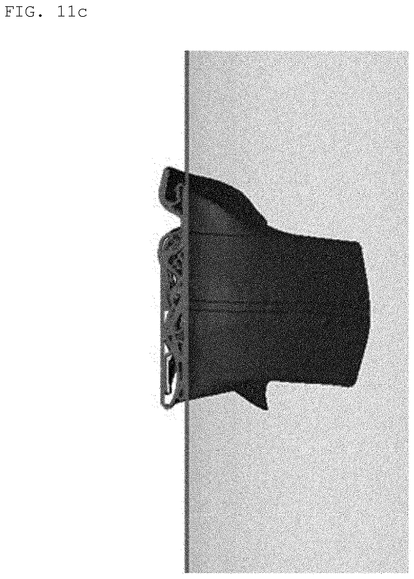

FIG. 11A is a deformation analysis result of an early collision phase of the first comparative example, FIG. 11B is a deformation analysis result of a mid-collision phase of the first comparative example, and FIG. 11C is a deformation analysis result of a late-collision phase of the first comparative example.

In the first comparative example, it may be seen that in the early collision phase, the second side sill frame 200 and the second reinforcing frame 400 are compressed and deformed in the X-axis direction.

In the first comparative example, it may be seen that in the mid-collision phase, the first side sill frame 100, the first reinforcing frame 300, the second side sill frame 200, the second reinforcing frame 400, and the diaphragm member 500 are compressed and deformed in the X-axis direction, and an amount of compressive deformation in the X-axis direction is larger than an amount of tensile deformation in the Z-axis.

In the first comparative example, it may be seen that in the mid-collision phase and the late-collision phase, the first reinforcing frame 300 and the second reinforcing frame 400 are not crushed normally in the X-axis direction, and is not compressed uniformly in the X-axis direction while generating tilting deformation in the Z-axis direction.

There may be a problem in that this may be a major factor in instability in exhibiting stable collision energy absorption performance under various collision environments.

FIGS. 12A to 12C are deformation analysis results of the side sill for a vehicle of the first embodiment.

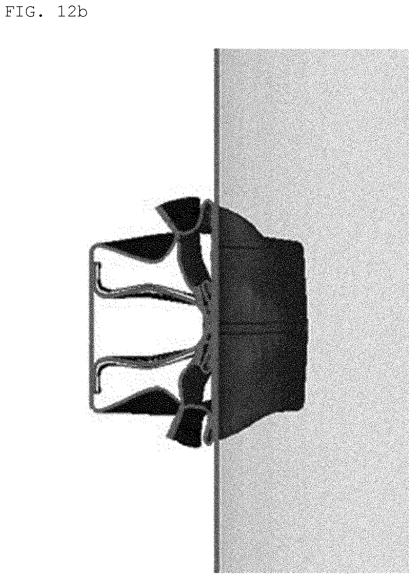

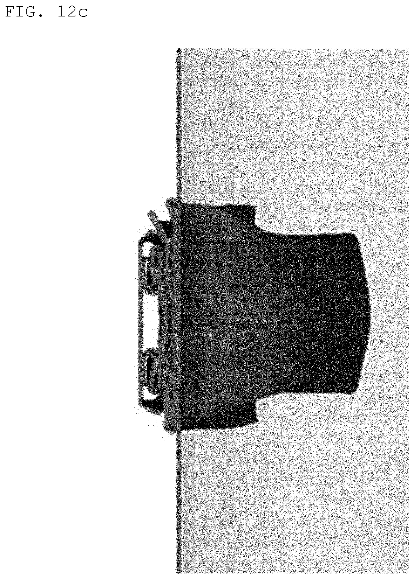

FIG. 12A is a deformation analysis result of an early collision phase of the first embodiment, FIG. 12B is a deformation analysis result of a mid-collision phase of the first embodiment, and FIG. 12C is a deformation analysis result of a late-collision phase of the first embodiment.

In the first embodiment, it may be seen that in the early collision phase, the second side sill frame 200 and the second reinforcing frame 400 are compressed and deformed in the X-axis direction.

In the first embodiment, it may be seen that in the mid-collision phase, the first side sill frame 100, the first reinforcing frame 300, the second side sill frame 200, the second reinforcing frame 400, and the diaphragm member 500 are compressed and deformed in the X-axis direction, and an amount of compressive deformation in the X-axis direction is larger than an amount of tensile deformation in the Z-axis.

In the first embodiment, it may be seen that in the mid-collision phase and the mid-collision phase, as bending is induced at the bending point 370 of the first reinforcing frame 300, the first reinforcing frame 300 and the second reinforcing frame 400 are compressed uniformly in the X-axis direction without having a phenomenon in which deformation thereof is tilted to one side.

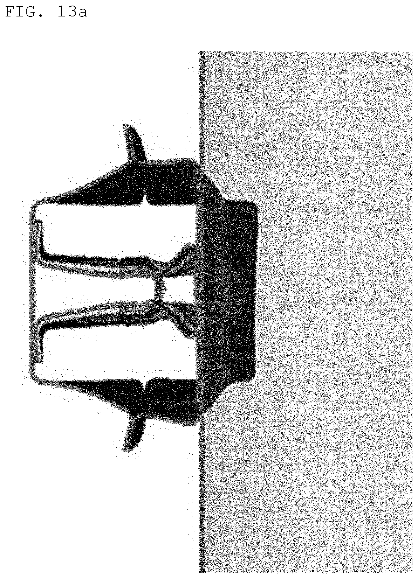

Hereinafter, with reference to FIGS. 13A to 14C, deformation analysis results of a side sill for a vehicle of a second comparative example and a side sill for a vehicle of a second embodiment will be described.

FIGS. 13A to 13C are deformation analysis results of the side sill for a vehicle of the second comparative example.

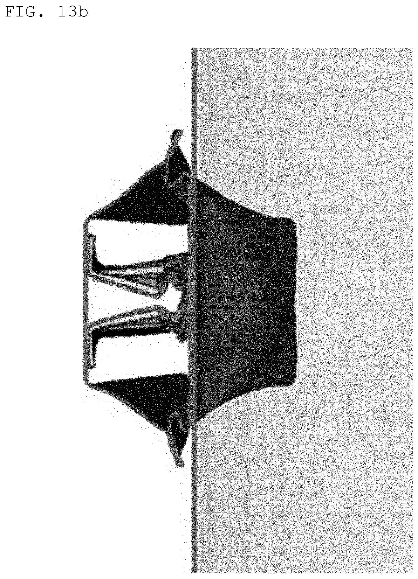

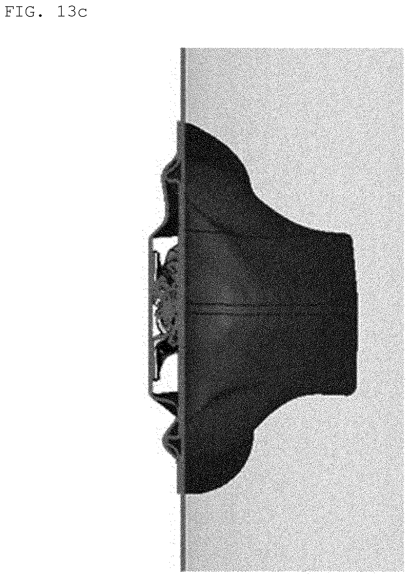

FIG. 13A is a deformation analysis result of an early collision phase of the second comparative example, FIG 13B is a deformation analysis result of a mid-collision phase of the second comparative example, and FIG. 13C is a deformation analysis result of a late-collision phase of the second comparative example.

In the second comparative example, it may be seen that in the early collision phase, the second side sill frame 200 and the second reinforcing frame 400 are compressed and deformed in the X-axis direction.

The second comparative example, it may be seen that in the mid-collision phase and the late-collision phase, the first reinforcing frame 300 and the second reinforcing frame 400 is not crushed normally in the X-axis direction, and is not compressed uniformly in the X-axis direction while generating tilting deformation in the Z-axis direction.

There may be a problem in that this may be a major factor in instability in exhibiting stable collision energy absorption performance under various collision environments.

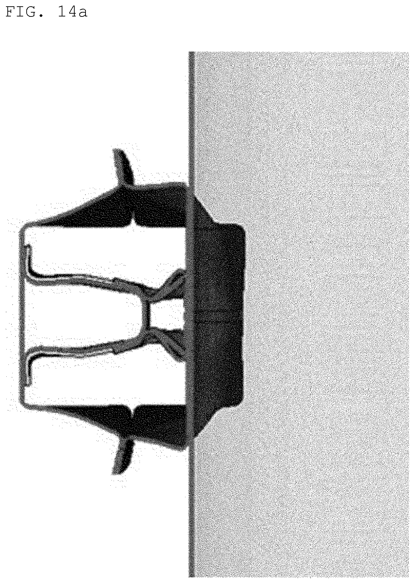

FIGS. 14A to 14C are deformation analysis results of the side sill for a vehicle of the second embodiment.

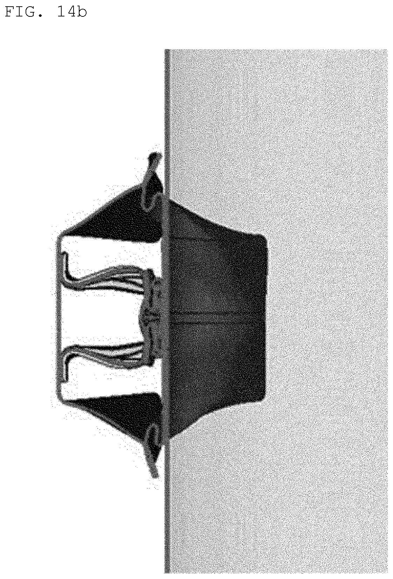

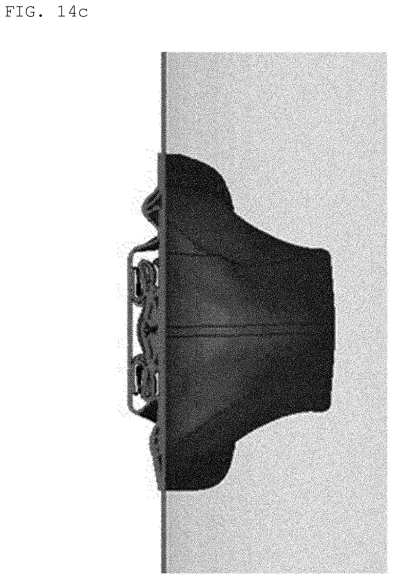

FIG. 14A is a deformation analysis result of an early collision phase of the second embodiment, FIG. 14B is a deformation analysis result of a mid-collision phase of the second embodiment, and FIG. 14C is a deformation analysis result of the second embodiment.

In the second embodiment, it may be seen that in the early collision phase, the second side sill frame 200 and the second reinforcing frame 400 are compressed and deformed in the X-axis direction.

In the second embodiment, it may be seen that in the mid-collision phase, the first side sill frame 100, the first reinforcing frame 300, the second side sill frame 200, the second reinforcing frame 400, and the diaphragm member 500 are compressed and deformed in the X-axis direction, and an amount of compressive deformation in the X-axis direction is larger than an amount of tensile deformation in the Z-axis.

In the second embodiment, it may be seen that in the mid-collision phase and the late-collision phase, as bending is induced at the bending point 370 of the first reinforcing frame 300, the first reinforcing frame 300 and the second reinforcing frame 400 are compressed uniformly in the X-axis direction without having a phenomenon in which deformation thereof is tilted to one side.

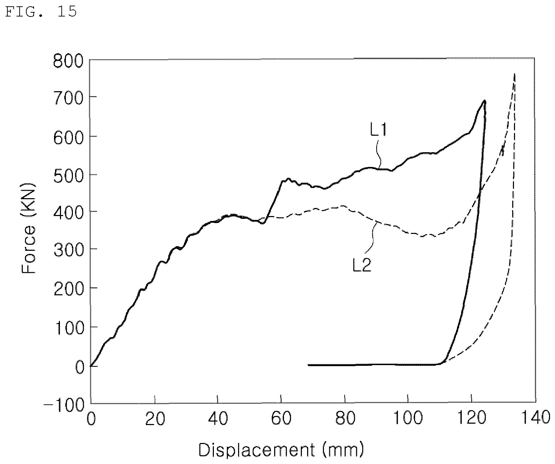

FIG. 15 is a load-displacement diagram of the side sill for a vehicle of the first comparative example of FIG. 1 and the first embodiment of FIG. 5.

A load-displacement value of the side sill for a vehicle of the first comparative example in FIG. 1 is indicated as a first value L₁, and a load-displacement value of the side sill for a vehicle of the first embodiment of FIG. 5 is indicated as a second value L₂.

Referring to the first value L1 and the second value L2, it may be seen that a displacement of the side sill for a vehicle of the first embodiment of FIG. 5 is relatively small under the same load as compared to the side sill for a vehicle of the first comparative example of FIG. 1.

It may be seen that for the first value L1, an impact absorption ability decreases rapidly at a displacement of 60 mm or more, which corresponds to the late-collision phase, while for the second value L2, impacts are stably absorbed even in the late-collision phase.

Specifically, internal energy of the side sill for a vehicle of the first comparative example was 43.8 KJ and a weight of the side sill for a vehicle of the first comparative example was 19.9 kg, and internal energy of the side sill for a vehicle of the first embodiment was 50.2 KJ and a weight of the side sill for a vehicle of the first embodiment was 20.5 kg.

That is, a ratio of the internal energy per 1 kg of the side sill for a vehicle of the first comparative example is 2.19 (KJ/kg), and a ratio of the internal energy per 1 kg of the side sill for a vehicle of the first embodiment is 2.45 (KJ/kg), from which it may be seen that the first embodiment has a higher ratio of internal energy per 1 kg than that of the first comparative example and has thus more excellent energy absorption performance per unit weight.

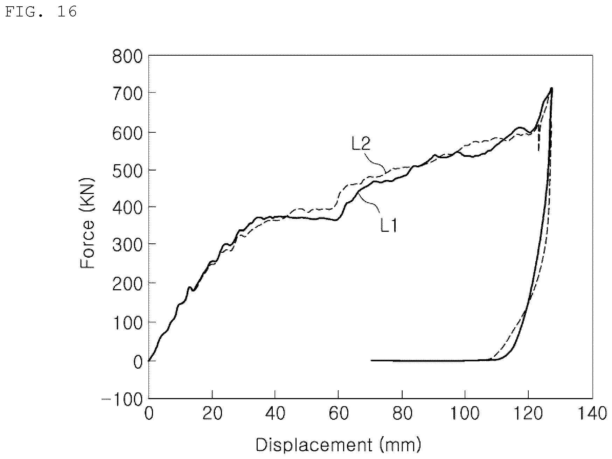

FIG. 16 is a load-displacement diagram of the side sill for a vehicle of the third comparative example of FIG. 3 and the second embodiment of FIG. 8.

A load-displacement value of the side sill for a vehicle of the second comparative example in FIG. 3 is indicated as a first value L1, and a load-displacement value of the side sill for a vehicle of the second embodiment of FIG. 8 is indicated as a second value L2.

Referring to the first value L₁ and the second value L₂, it may be seen that a displacement of the side sill for a vehicle of the third embodiment of FIG. 7 is almost similar to that of the side sill for a vehicle of the second comparative example of FIG. 3 under the same load.

Specifically, internal energy of the side sill for a vehicle of the second comparative example was 51.2 KJ and a weight of the side sill for a vehicle of the second comparative example was 18.3 kg, and internal energy of the side sill for a vehicle of the second embodiment was 51.7 KJ and a weight of the side sill for a vehicle of the second embodiment was 18.9 Kg.

That is, a ratio of the internal energy per 1 kg of the side sill for a vehicle of the second comparative example is 2.80 (KJ/kg), and a ratio of the internal energy per 1 kg of the side sill for a vehicle of the second embodiment is 2.74 (KJ/kg), from which it may be seen that the energy absorption performance per unit weight of the second embodiment and the second comparative example did not show a greatly significant difference.

Although the example embodiment of the present disclosure has been described in detail above, it will be obvious to those skilled in the art that the scope of the present disclosure is not limited thereto, and various modifications and variation may be made without departing from the technical concept of the present disclosure described in the claims.

### DESCRIPTION OF REFERENCE CHARACTERS

100: FIRST SIDE SILL FRAME 110: FIRST INNER SURFACE
200: SECOND SIDE SILL FRAME 210: SECOND INNER SURFACE
300: FIRST REINFORCING FRAME 310: FIRST UPPER FLANGE
330: FIRST WEB MEMBER 331: FIRST SECTION
333: SECOND SECTION 350: FIRST LOWER FLANGE
370: BENDING POINT 390: BENDING ANGLE
400: SECOND REINFORCING FRAME 410: SECOND UPPER FLANGE
430: SECOND WEB MEMBER 450: SECOND LOWER FLANGE
500: DIAPHRAGM MEMBER M1: FIRST CLOSED SECTION
M2: SECOND CLOSED SECTION P: CONCAVO-CONVEX PORTION
P1: PROTRUDING SURFACE P2: INSERTION SURFACE
P3: INCLINED SURFACE S: HOLLOW PORTION
T: INSTALLATION WIDTH OF FIRST REINFORCING FRAME U: POSITION OF BENDING POINT

## Claims

1. A side sill for a vehicle, comprising:
a first side sill frame;
a second side sill frame coupled to the first side sill frame so as to form a hollow portion together with the first side sill frame;
a first reinforcing frame which is disposed in the hollow portion, and which has one side joined to the first side sill frame so as to form a first closed section;
a diaphragm member which is joined to the first side sill frame and the second side sill frame so as to divide the hollow portion, and to which the other side of the first reinforcing frame is joined; and
a second reinforcing frame disposed in the hollow portion, and joined to the diaphragm member so as to form a second closed section,
wherein the first reinforcing frame has a bending point with a shape of protruding outward from the first closed section.

2. A side sill for a vehicle, comprising:
a first side sill frame;
a second side sill frame coupled to the first side sill frame so as to form a hollow portion together with the first side sill frame;
a first reinforcing frame which is disposed in the hollow portion, and which has one side joined to the first side sill frame so as to form a first closed section; and
a second reinforcing frame which is disposed in the hollow portion, and which has one side joined to the first reinforcing frame so as to form a second closed section,
wherein the first reinforcing frame has a bending point with a shape of protruding outward from the first closed section.

3. The side sill for a vehicle of claim 1 or 2, wherein at least one of the first side sill frame, the second side sill frame, the first reinforcing frame, and the second reinforcing frame is formed of a steel material.

4. The side sill for a vehicle of claim 1 or 2, wherein the first reinforcing frame and the second reinforcing frame include a concavo-convex portion in a longitudinal cross-section of the side sill.

5. The side sill for a vehicle of claim 4, wherein the concavo-convex portion is configured so that a protruding surface and an insertion surface are alternately formed in a longitudinal direction of the side sill, and an inclined surface is formed between the protruding surface and the insertion surface.

6. The side sill for a vehicle of claim 5, wherein the protruding surface of the first reinforcing frame overlaps the protruding surface of the second reinforcing frame, and the insertion surface of the first reinforcing frame overlaps the insertion surface of the second reinforcing frame.

7. The side sill for a vehicle of claim 1 or claim 2, wherein the first reinforcing frame is formed so that the bending point is spaced apart from a first inner surface of the first side sill frame by a distance of 30% to 70% of an installation width of the first reinforcing frame.

8. The side sill for a vehicle of claim 1 or claim 2, wherein the first reinforcing frame comprises:
a first section extending toward a first inner surface of the first side sill frame with the bending point as a boundary; and
a second section bent with the bending point as a boundary to extend toward a second inner surface of the second side sill frame, and forming a bending angle with the first section inside the first closed section.

9. The side sill for a vehicle of claim 8, wherein the first reinforcing frame is configured so that the bending angle is formed inside the first closed section, and the bending angle has a range of 165 to 175 degrees.

10. The side sill for a vehicle of claim 1 or 2, wherein the second reinforcing frame is formed so that the other side thereof is disposed to be in contact with a second inner surface of the second side sill frame.

11. The side sill for a vehicle of claim 1 or 2, wherein the first reinforcing frame and the second reinforcing frame are configured so that an installation width thereof does not decrease from a second inner surface of the second side sill frame to a first inner surface of the first side sill frame.

12. The side sill for a vehicle of claim 1 or 2, wherein the first reinforcing frame and the second reinforcing frame are formed by bending a single steel sheet in multiple stages.
